# EUROPEAN PATENT SPECIFICATION

(11) **EP 2 674 696 B1**
(45) Date of publication and mention of the grant of the patent: **29.04.2020**
(21) Application number: 12745041.9
(22) Date of filing: 30.01.2012
(51) Int. Cl.: F28F 13/00, F28D 15/00, F28D 20/00, F25B 17/08, F25B 37/00

(54) **HEAT STORAGE DEVICE**
WÄRMESPEICHERVORRICHTUNG
DISPOSITIF DE STOCKAGE THERMIQUE

(30) Priority: 07.02.2011 JP 2011024474
(43) Date of publication of application: 18.12.2013
(73) Proprietor: Kabushiki Kaisha Toyota Chuo Kenkyusho, Nagakute-shi, Aichi 480-1192 (JP)
(72) Inventor: SHIMAZU, Takashi, Nagakute-shi, Aichi 480-1192 (JP); FUKUSHIMA, Yoshiaki, Nagakute-shi, Aichi 480-1192 (JP)
(74) Representative: Kramer Barske Schmidtchen Patentanwälte PartG mbB
(86) International application number: PCT/JP2012/052034
(87) International publication number: WO 2012/108288

(56) References cited:
- WO-A2-2009/002893
- JP-A- 5 071 887
- JP-A- 7 332 788
- JP-A- 9 170 846
- JP-A- 2000 266 424
- JP-A- 2001 004 248
- JP-A- 2003 214 721
- JP-A- 2006 300 414
- JP-A- 2009 257 239
- JP-A- 2009 257 239

## Description

### TECHNICAL FIELD

The invention relates to a heat storage device.

### BACKGROUND ART

In recent years, the reduction of emission of carbon dioxide is firmly called for and it is necessary to promote energy saving and utilization of exhaust heat. For that purpose, development of high-efficiency heat storage technology is needed. As a promising candidate of the technology, chemical heat storage technology can be cited, which have a large heat storage amount per unit volume or unit mass and capable of long-term heat storage.

As an example of the chemical heat storage technology, a chemical heat storage material mainly consisting of quicklime having many pores and being generated by predetermined thermal treatment on crystalline limestone whose particle size is 0.3 to 4 mm is known. Further, a heat storage device configured by connecting a container filled with the chemical heat storage material and an evaporative condenser by a pipe is known (see, for example, Japanese Patent Application Laid-Open (JP-A) No. 1-225686).

Furthermore, a heat storage capsule in which a powder chemical heat storage material is contained in a ratio of 10 to 60 volume % of the internal space, and a heat storage device connecting a reactor or reaction tower filled with at least one of the heat storage capsules and a heat supply device are known (see, for example, Japanese Patent Application Publication (JP-B) No. 6-80395 and JP-B No. 6-80394).

Furthermore, a chemical heat storage type freezer including a container filled with reaction materials, an evaporator that evaporates a refrigerant, a condenser that condenses the refrigerant, and a connecting pipe with a valve that connects these devices, and characterized in that plural evaporating dishes are placed in the evaporator is known (see, for example, JP-A No. 7-332788).

JP 2009-257239 A discloses a heat storage device according to the preamble of claim 1.

### SUMMARY OF INVENTION

### PROBLEM TO BE SOLVED BY THE INVENTION

However, in a conventional heat storage device combining a reactor containing a chemical heat storage material and an evaporative condenser, constraints imposed on the operating temperature of the evaporative condenser are severe and thus, the range of selection of the operating temperature (particularly, the supply temperature) of the whole device tends to be narrow.

The invention is made in view of the above circumstances. That is, a subject of the invention is to provide a heat storage device which has a wide range of selection of the operating temperature (particularly, the supply temperature) and can radiate heat at still higher temperature by storing heat supplied from outside.

### MEANS FOR SOLVING THE PROBLEMS

A concrete means for solving the subject is as follows.
<1> A heat storage device according to claim 1 is provided, the heat storage device including: two or more reactors including a first reactor having a heat storage material containing a physical adsorbent that stores heat when water vapor is desorbed and radiates heat when the water vapor is immobilized by physical adsorption, and a second reactor having a heat storage material containing a chemical heat storage material that stores heat when water vapor is desorbed and radiates heat when the water vapor is immobilized by a chemical reaction; and a water vapor pipe connecting the two or more reactors to cause the water vapor to flow between the two or more reactors and including at least one of a pressure control means that controls the difference in the water vapor pressure between the two or more reactors by raising the pressure of at least one reactor among the two or more reactors, and a volume control means that includes a cylinder and a piston and that controls a volume of the water vapor pipe by moving the piston inside the cylinder such that a volume inside the cylinder is increased or decreased, wherein the water vapor desorbed from one of the reactors is immobilized in the other reactor by using a difference in water vapor pressure between the two or more reactors.
   In the heat storage device according to <1> described above, when heat is supplied to a first reactor, water vapor is desorbed from a physical adsorbent due to an endothermic reaction in the first reactor. The water vapor pressure at the first reactor side is thereby made higher than the water vapor pressure at the second reactor side, and heat is stored at the first reactor side. Next, water vapor desorbed from inside the first reactor is transported to the second reactor through a water vapor pipe and the water vapor transported to the second reactor is immobilized in a chemical heat storage material by an exothermic reaction in the second reactor. Heat is released from the second reactor due to the exothermic reaction.
   The physical adsorbent in the first reactor has, when compared with the chemical heat storage material in the second reactor, a smaller amount of heat that is generated and absorbed for immobilization and desorption of water vapor. That is, an amount of generation heat (absolute value) when water vapor is immobilized in the chemical heat storage material in the second reactor is larger than an amount of absorption heat (absolute value) when water vapor is desorbed from the physical adsorbent in the first reactor.
   Thus, by supplying heat to the first reactor and causing the second reactor to immobilize water vapor desorbed from the first reactor, heat at a higher temperature than the temperature of the heat supplied to the first reactor can be radiated from the second reactor.
   Therefore, according to the heat storage device in <1> described above, heat supplied from outside can be stored to radiate heat at a still higher temperature. That is, according to the heat storage device described in <1> above, when compared with a conventional heat storage device combining a reactor having a chemical heat storage material and an evaporative condenser, the supply temperature can be lowered.
   In addition, the heat storage device described in <1> above is the combination containing a reactor having a physical adsorbent and a reactor having a chemical heat storage material and therefore, when compared with a conventional heat storage device combining a reactor having a chemical heat storage material and an evaporative condenser, the range of selection of the operating temperature (particularly, the supply temperature) is wider. Furthermore, according to the heat storage device described in <1> above, a difference in water vapor pressure can be controlled more effectively and thus, water vapor can be immobilized and desorbed more effectively.
<2> The heat storage device described in <1> above, wherein the water vapor pipe is provided with a valve to control the difference in the water vapor pressure by opening/closing the valve.
   According to the heat storage device described in <2> above, water vapor can be immobilized and desorbed more effectively.
<3> The heat storage device described in <1> or <2> above, wherein the two or more reactors further include a third reactor that condenses the water vapor and vaporizes water (hereinafter, also called "vapor-liquid phase changes").
   According to the heat storage device described in <3> above, the flow amount of water vapor in the heat storage device can be controlled more effectively. In addition, water vapor in the heat storage device can be separated and stored as water.
   The third reactor to condense water vapor and vaporize water (vapor-liquid phase changes) includes a reactor that makes vapor-liquid phase changes by a temperature control means and a reactor that makes vapor-liquid phase changes by a pressure control means.
<4> The heat storage device described in any one of <1> to <3> above, wherein the first reactor and the second reactor have a heat medium channel through which a heat medium that exchanges heat with the heat storage material flows.
   According to the heat storage device described in <4> above, heat can efficiently be exchanged between a heat medium and the heat storage material and thus, water vapor can be immobilized and desorbed more effectively.
<5> The heat storage device described in any one of <1> to <4> above, wherein the first reactor and the second reactor have two or more reaction chambers in which the heat storage material is contained, and a heat medium channel arranged at least between the reaction chambers and through which a heat medium that exchanges heat with the heat storage material flows.
   According to the heat storage device described in <5> above, the efficiency of heat exchange between a heat medium and the heat storage material can be improved and thus, thermal contact resistance of a contact surface (heating surface) between the inner wall of the reaction chamber and the heat storage material can be improved, and water vapor can be immobilized and desorbed more effectively.
   In the heat storage device described in <5> above, the first reactor and the second reactor more preferably have two or more reaction chambers and two or more heat medium channels and are configured so that the reaction chamber and the heat medium channel are alternately arranged.
<6> The heat storage device described in any one of <1> to <5> above, wherein a dead volume is 10% or less with respect to a volume at 50°C and 10 kPa of a maximum amount of water vapor that can be immobilized in one reactor among the two or more reactors.
   According to the heat storage device described in <6> above, water vapor pressure in the heat storage device can be maintained at a high level and thus, water vapor can be immobilized and desorbed more efficiently. Particularly during an initial operation, reaction delays due to transport delays of water vapor can effectively be suppressed.
<7> The heat storage device described in any one of <1> to <6> above, wherein the physical adsorbent is at least one selected from the group consisting of activated carbon, mesoporous silica, zeolite, silica gel, and clay mineral.
   According to the heat storage device described in <7> above, the amount of heat that is generated and absorbed when water vapor is immobilized and desorbed in the first reactor can still be decreased, and thus, controllability and responsiveness of the first reactor and the whole heat storage device are further improved.
<8> The heat storage device described in any one of <1> to <7> above, wherein the chemical heat storage material is an inorganic hydroxide.
   According to the heat storage device described in <8> above, material stability in an immobilization reaction of water vapor and a desorption reaction of water vapor is still improved. Moreover, inorganic hydroxide with less environmental impact is used and thus, safety including production, use, and recycling can be ensured more easily.
<9> The heat storage device described in any one of <1> to <8> above, the chemical heat storage material is a hydroxide of an alkaline earth metal.

According to the heat storage device described in <9> above, material stability in an immobilization reaction of water vapor and a desorption reaction of water vapor is still improved. Moreover, hydroxide of an alkaline earth metal with less environmental impact is used and thus, safety for a process including production, use, and recycling can be ensured more easily.

### EFFECTS OF INVENTION

According to the invention, a heat storage device which has a wide range of selection of the operating temperature (particularly, the supply temperature) and can radiate heat at still higher temperature by storing heat supplied from outside can be provided.

### BRIEF DESCRIPTION OF DRAWINGS

FIG. 1 is a diagram schematically showing a heat storage device according to a first comparative example.
FIG. 2 is a diagram schematically showing a first heat exchange type reactor according to the first comparative example.
FIG. 3 is a diagram schematically showing a modification of the first heat exchange type reactor according to the first comparative example.
FIG. 4 is a diagram schematically showing a second heat exchange type reactor according to the first comparative example.
FIG. 5 is a diagram schematically showing a heat storage device according to a first embodiment of the invention.
FIG. 6 is a diagram schematically showing a heat storage device according to a second embodiment of the invention.
FIG. 7 is a diagram schematically showing a heat storage device according to a second comparative example.

### DESCRIPTION OF EMBODIMENTS

Hereinafter, a heat storage device according to each comparative example and embodiment of the invention will be described with reference to the drawings.

### [First comparative example]

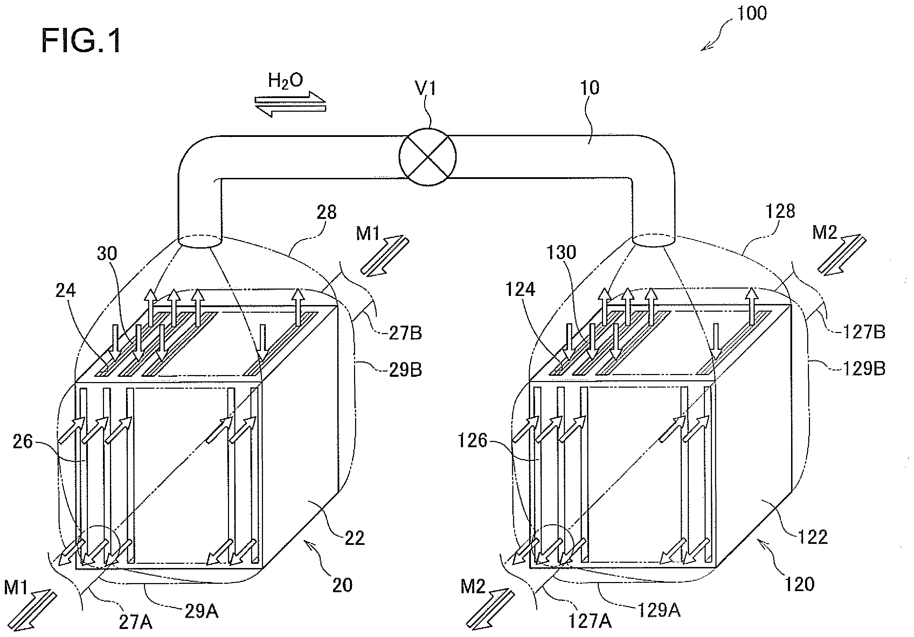

FIG. 1 is a diagram schematically showing a heat storage device 100 according to a first comparative example not forming part of the claimed invention.

As shown in FIG. 1, the heat storage device 100 includes a first heat exchange type reactor 20 (first reactor), a second heat exchange type reactor 120 (second reactor), and a water vapor pipe 10 connecting the first heat exchange type reactor 20 and the second heat exchange type reactor 120.

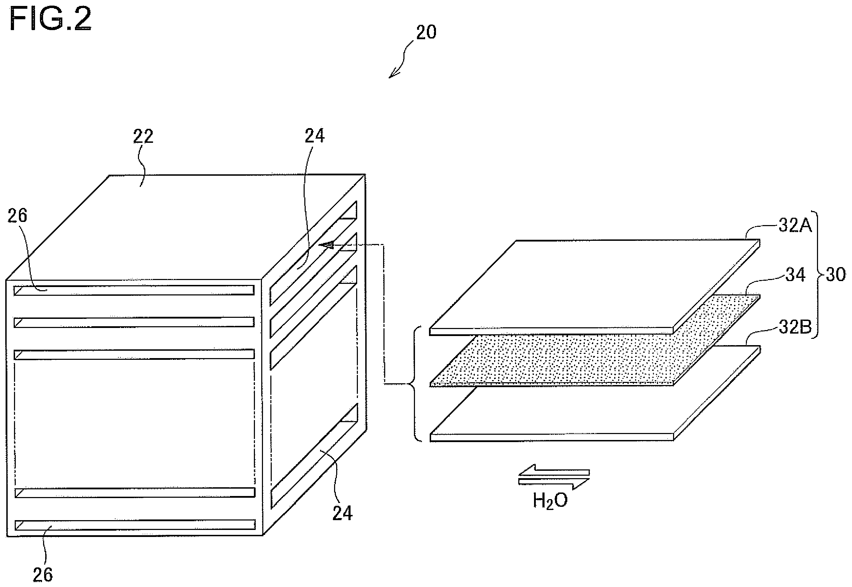

FIG. 2 is a diagram schematically showing the first heat exchange type reactor 20 in FIG. 1.

As shown in FIG. 2, the first heat exchange type reactor 20 includes a cabinet 22, plural heat medium channels 26 provided in the cabinet 22, plural reaction chambers 24 provided in the cabinet 22, and a layered body 30 accommodated in each of the reaction chambers 24 and having a structure in which a support 34 is sandwiched between two heat storage material forming bodies 32A, 32B containing a physical adsorbent (for example, a porous body of activated carbon, mesoporous silica and the like).

In the cabinet 22, the reaction chamber 24 and the heat medium channel 26 are alternately arranged and the two heat medium channels 26 are on the outermost side. The reaction chamber 24 and the heat medium channel 26 are separated from each other by a partition wall. With the above configuration, heat can be exchanged between a heat medium M1 supplied from outside and a heat storage material forming body in the reaction chamber 24. In the present comparative example, the reaction chamber 24 and the heat medium channel 26 each have a prismatic space with an open end in a flat rectangular shape. In the present comparative example, the first heat exchange type reactor 20 is configured as a cross flow heat exchange type reactor in which an opening direction of the reactor 24 (flow direction of water vapor) and an opening direction of the heat medium channel 26 (flow direction of the heat medium) are orthogonal in side view.

The first reactor is preferably configured so that, like an example of the first heat exchange type reactor 20, two or more reaction chambers containing a heat storage material are included and the heat medium channel is arranged between the reaction chambers and more preferably, two or more reaction chambers and two or more heat medium channels are included and the reaction chamber and the heat medium channel are alternately arranged.

The number of the reaction chambers 24 or the heat medium channels 26 in the first heat exchange type reactor 20 is not specifically limited and can appropriately be set by considering the amount of heat input into or output from the first heat exchange type reactor 20 and the area of the heating surface of the heat storage material forming body (contact area with the inner wall of the reactor).

As the material of the cabinet 22, a material with high thermal conductivity like a metal (for example, stainless steel, aluminum, aluminum alloy and the like) is suitable.

As shown in FIG. 2, the layered body 30 includes two heat storage material forming bodies (the heat storage material forming body 32A and the heat storage material forming body 32B; hereinafter, these are called together as "the heat storage material forming bodies 32A, 32B") containing a physical adsorbent (for example, a porous body such as activated carbon and mesoporous silica) that stores heat (absorbs heat) when water vapor is desorbed and radiates heat (generates heat) when water vapor is immobilized by physical adsorption and the support 34 sandwiched between the heat storage material forming bodies 32A, 32B.

However, the configuration of a layered body only needs to be a configuration having at least a 3-layer configuration like the heat storage material forming body/support/heat storage material forming body and may be, in addition to the 3-layer configuration, for example, another configuration in which the heat storage material forming body and the support are alternately arranged and the outermost layer is the heat storage material forming body (for example, a 5-layer configuration of the heat storage material forming body/support/heat storage material forming body/support/heat storage material forming body).

A heat storage device according to the present comparative example is not limited to containing the layered body of the heat storage material forming body and support in the reaction chamber of the first reactor, and the heat storage material forming body alone may be contained in the reaction chamber.

When the heat storage material forming body alone is contained in the reaction chamber, it is preferable to secure a channel through which water vapor can be flowed to a water vapor pipe in the reaction chamber by using, for example, a heat storage material forming body provided with a channel of water vapor and the like.

The heat storage material contained in the first reactor is not limited to the heat storage material forming body (for example, the heat storage material forming bodies 32A, 32B) and a powder heat storage material may also be used, but it is preferable to use the heat storage material forming body in terms of further improving the efficiency of heat exchange in the reactor.

The heat storage material forming bodies 32A, 32B each contain a physical adsorbent (for example, a porous body such as activated carbon, mesoporous silica and the like).

The physical adsorbent stores heat (absorbs heat) when water vapor is desorbed and radiates heat (generates heat) when water vapor is immobilized by physical adsorption. A medium that reversibly desorbs water vapor (endothermic reaction) and immobilizes water vapor (exothermic reaction) is preferably used as the physical adsorbent.

When compared with a chemical heat storage material described later, the physical adsorbent has a property that an amount of heat go out and in when water vapor is immobilized and desorbed is smaller. That is, though details will be described later, an amount of absorption heat (absolute value) when water vapor is desorbed and an amount of generation heat (absolute value) when water vapor is immobilized are smaller when compared with that of a chemical heat storage material.

Further, the physical adsorbent has a property that the adsorption/release speed (speed of immobilization and desorption) of water vapor is fast.

From the foregoing, a heat storage device according to the first comparative example including a first reactor containing a physical adsorbent is highly responsive to the supply of heat and superior in controllability of immobilization and desorption of water vapor.

Further, while a conventional heat storage device is a combination of a reactor having a chemical heat storage material and an evaporative condenser, a heat storage device according to the first comparative example uses a first reactor containing a physical adsorbent instead of the evaporative condenser and thus, the configuration of the device can be simplified with, for example, being able to make antifreezing in the evaporative condenser unnecessary.

The physical adsorbent in the first comparative example is not limited to activated carbon and mesoporous silica, and porous bodies in general can be used.

A preferred form of the physical adsorbent will be described later.

As the support 34, it is preferable to use a support capable of flowing water vapor in a direction (for example, the direction of a hollow arrow in FIG. 2) along the surface of the support 34. A channel of water vapor can thereby be secured between two heat storage material forming bodies and, thus, water vapor (H₂O) supplied from the water vapor pipe 10 can be supplied to a wide area of the heat storage material forming bodies 32A, 32B. Further, water vapor adsorbed in the wide area of the heat storage material forming bodies 32A, 32B can be released toward the water vapor pipe 10 via the support 34.

More specifically, a corrugated plate or porous body plate is preferably used as the support 34.

When a porous body plate is used as the support 34, water vapor passes through the porous body plate.

When a corrugated plate is used as the support 34, water vapor passes through a gap between the corrugated plate and a heat storage material forming body.

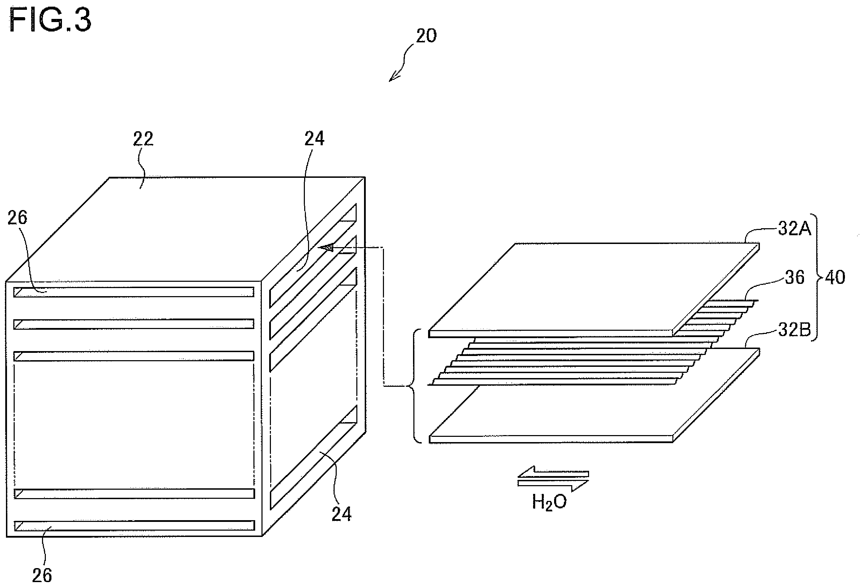

FIG. 3 is a diagram conceptually showing the first heat exchange type reactor 20 and a layered body 40 contained in the first heat exchange type reactor 20 particularly when a corrugated plate 36 is used as the support. The configuration other than the corrugated plate 36 as a support is the same as that in FIG. 2.

When the corrugated plate 36 is used as the support, water vapor passes through a gap between the corrugated plate 36 and the heat storage material forming bodies 32A, 32B in the layered body 40 (direction of a hollow arrow in FIG. 3).

Also, as shown in FIG. 1, the first heat exchange type reactor 20 and the water vapor pipe 10 in the heat storage device 100 are connected via a header member 28 (for example, a manifold and the like) that connects the plural reaction chambers 24 in the first heat exchange type reactor 20 and the water vapor pipe 10 in an airtight state. Accordingly, water vapor can be flowed in an airtight state between the plural reaction chambers 24 and the water vapor pipe 10.

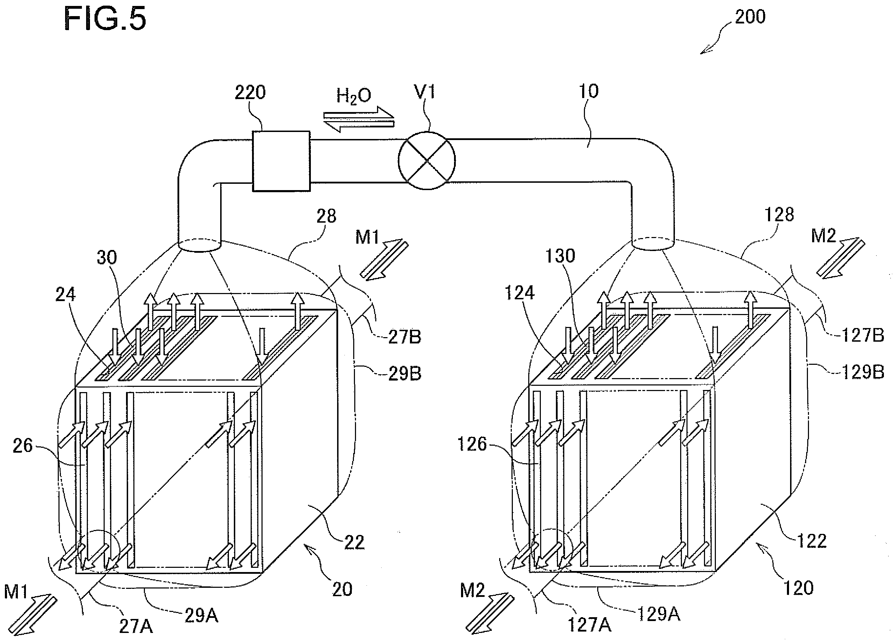

In FIG. 1, to make the configuration of the first heat exchange type reactor 20 and second heat exchange type reactor 120 easily visible, the header member 28, a header member 29A, a header member 29B, a header member 128, a header member 129A, a header member 129B, a heat medium pipe 27A, a heat medium pipe 27B, a heat medium pipe 127A, and a heat medium pipe 127B are represented by a chain double-dashed line (this also applies to FIGS. 5 to 7 described later).

Also, as shown in FIG. 1, the first heat exchange type reactor 20 is connected to the heat storage pipe 27A via the header member 29A (for example, a manifold and the like) and to the heat storage pipe 27B via the header member 29B (for example, a manifold and the like). The plural heat medium channels 26 in the first heat exchange type reactor 20 is communicatively connected to the heat medium pipe 27A by the header member 29A in an airtight state and to the heat medium pipe 27B by the header member 29B in an airtight state. Accordingly, the heat medium M1 can be flowed between the heat medium channels 26 in the first heat exchange type reactor 20 and the outside of the heat storage device 100 (hereinafter, referred to simply as "the outside" or "outside the device") through the heat medium pipe 27A and the heat medium pipe 27B.

The heat medium M1 is a medium that exchanges heat with the heat storage material forming bodies 32A, 32B.

As the heat medium M1, a fluid normally used as a heat medium like alcohol such as ethanol, water, oil, or a mixture thereof can be used.

As shown in FIG. 1, the water vapor pipe 10 is provided with a valve V1 and a difference in water vapor pressure can be controlled by opening/closing the valve V1. For example, by maintaining a state in which the valve V1 is closed, a difference between water vapor pressure of the first heat exchange type reactor 20 and water vapor pressure of the second heat exchange type reactor 120 can be generated more effectively. Further, by opening the valve V1 after maintaining the state in which the valve V1 is closed, water vapor can transported more effectively (faster). Further, by maintaining the valve V1 closed, heat can be stored in a heat exchange type reactor for a long time.

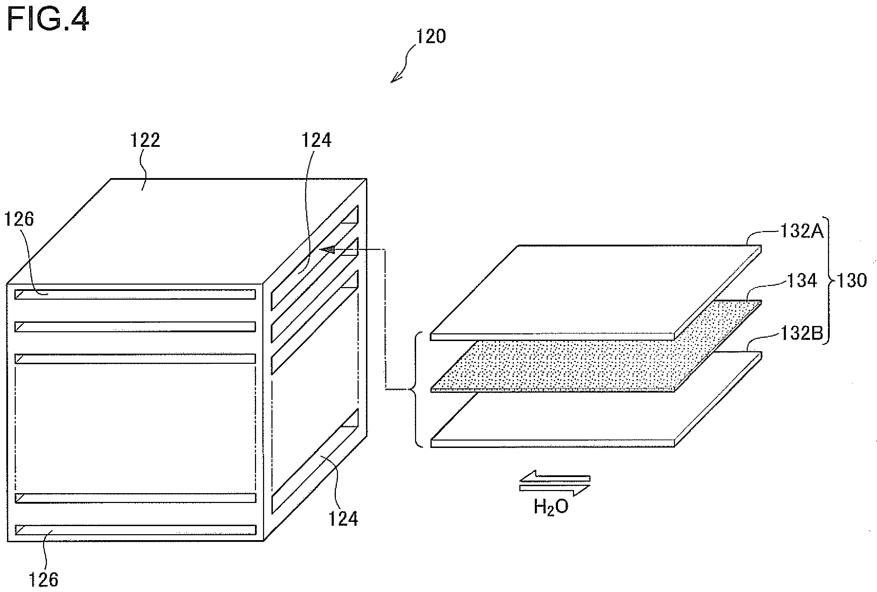

FIG. 4 is a diagram schematically showing the second heat exchange type reactor 120 in FIG. 1.

As shown in FIG. 4, the second heat exchange type reactor 120 is, like the first heat exchange type reactor 20, a heat exchange type reactor in which plural reaction chambers 124, a layered body 130 contained in each of the reaction chambers 124, and plural heat medium channels 126 are provided in a cabinet 122.

The configuration of the layered body 130 in the second heat exchange type reactor 120 is the same as the configuration of the layered body 30 in the first heat exchange type reactor 20 except that heat storage material forming bodies 132A, 132B containing a chemical heat storage material (for example, Ca(OH)₂) that stores heat when water vapor is desorbed and radiates heat when water vapor is immobilized by a chemical reaction are used, instead of the heat storage material forming bodies 32A, 32B containing a physical adsorbent in the configuration of the layered body 30 in the first heat exchange type reactor 20.

The chemical heat storage material stores heat (absorbs heat) when water vapor is desorbed and radiates heat (generates heat) when water vapor is immobilized by a chemical reaction.

A material that reversibly desorbs water vapor (endothermic reaction) and immobilizes water vapor (exothermic reaction) is preferably used as the chemical adsorbent.

For example, as an example of the chemical adsorbent, calcium hydroxide (Ca(OH)₂) as one of inorganic hydroxide causes, as shown in the following formula (1), a desorption reaction of water vapor (dehydration reaction) and an immobilization reaction of water vapor (hydration reaction) reversibly.

Ca(OH)₂ ⇔ CaO + H₂O ... Formula (1)

If the amount of absorption heat Q and the amount of generation heat Q are also shown in the formula (1), the following formula (2) showing a desorption reaction of water vapor (endothermic reaction) and the following formula (3) showing an immobilization reaction of water vapor (exothermic reaction) are obtained.

Ca(OH)₂ + Q → CaO + H₂O ... Formula (2)

CaO + H₂O → Ca(OH)₂ + Q ... Formula (3)

While the amount of heat go out and in when water vapor is immobilized and desorbed is larger than the amount of heat of the physical adsorbent, the chemical heat storage material has a property that the heat storage density (heat storage amount per unit mass) is higher than the heat storage density of the physical adsorbent.

For example, the heat storage density of Ca(OH)₂ as an example of the chemical heat storage material is approximately 1.86 MJ/kg (CaO based) and the heat storage density of activated carbon or mesoporous silica as an example of the physical adsorbent is about 0.6 MJ/kg to 0.8 MJ/kg.

The chemical heat storage material in the first comparative example is not limited to Ca(OH)₂, and inorganic hydroxide in general can be used.

A preferred form of the chemical adsorbent will be described later.

Other configurations and modifications of the second heat exchange type reactor 120 are similar to the configuration and modification of the first heat exchange type reactor 20.

In FIG. 1, configurations of header members 128, 129A, 129B connected to the second heat exchange type reactor 120 and heat medium pipes 127A, 127B are similar to those of the header members 28, 29A, 29B connected to the first heat exchange type reactor 20 and the heat medium pipes 127A, 127B.

A heat medium M2 that exchanges heat with the heat storage material forming bodies 132A, 132B flows through the heat medium pipes 127A, 127B.

As the heat medium M2 supplied into the second heat exchange type reactor 120, a fluid normally used as a heat medium like alcohol such as ethanol, water, oil, or a mixture thereof can be used.

Though not illustrated, the channel of flow of the heat medium M1 and the channel of flow of the heat medium M2 are independent of each other outside the heat storage device 100.

Though not illustrated, other units such as a water vapor supply unit to supply water vapor in the device, an exhaust unit to exhaust the device, and a pressure measuring unit to measure the water vapor pressure in the device may also be connected to the heat storage device 100.

Next, examples of radiation and regeneration by the heat storage device 100 will be described.

### (Radiation)

First, an example of heat utilization in which heat supplied to the first heat exchange type reactor 20 is transported to the second heat exchange type reactor 120 and the transported heat is radiated to the outside from the second heat exchange type reactor 120 will be described. In this example, the first heat exchange type reactor 20 is a reactor on the heat input side and the second heat exchange type reactor 120 is a reactor on the heat output side.

In this example, as the initial state, water vapor in the heat storage device 100 (hereinafter, referred to also as "inside the device") is gathered at the first heat exchange type reactor 20 side and water vapor is immobilized in the heat storage material forming bodies 32A, 32B containing a physical adsorbent in the first heat exchange type reactor 20, and then the valve V1 is closed. An example of the concrete method of creating the initial state of the heat storage device 100 is similar to a method of "regeneration" described later.

Heat is supplied to the first heat exchange type reactor 20 by flowing the heat medium M1 maintained at a predetermined temperature (for example, 5°C to 10°C). The supplied heat is stored in the first heat exchange type reactor 20. The flowing of the heat medium M1 at the predetermined temperature is preferably maintained throughout the radiation and regeneration.

The heat medium M2 to release heat to an outside heat utilization object flows to the second heat exchange type reactor 120.

In this state, the water vapor pressure at the first heat exchange type reactor 20 side is higher than the water vapor pressure at the second heat exchange type reactor 120 side. By maintaining a state in which the valve V1 is closed, a difference in the water vapor pressure between the first heat exchange type reactor 20 side and the second heat exchange type reactor 120 side can be maintained for a long time.

Next, when the valve V1 is opened, water vapor is transported from the first heat exchange type reactor 20 at a higher water vapor pressure to the second heat exchange type reactor 120 having a relatively lower water vapor pressure. At this point, in the first heat exchange type reactor 20, water vapor is desorbed from the heat storage material forming bodies 32A, 32B in the first heat exchange type reactor 20 by an endothermic reaction. The endothermic reaction is maintained by maintaining the flowing of the heat medium M1 at the predetermined temperature (for example, 5°C to 10°C) to the first heat exchange type reactor 20 (that is, by maintaining the supply of heat to the first heat exchange type reactor 20).

The heat storage material forming bodies 32A, 32B contain a physical adsorbent for which the amount of heat that is generated and absorbed for immobilization and desorption of water vapor is smaller than that of a chemical heat storage material. Thus, water vapor is easily desorbed from the heat storage material forming bodies 32A, 32B even if the temperature of heat supplied to the first heat exchange type reactor 20 is relatively low.

Water vapor reaching the second heat exchange type reactor 120 through transportation of the water vapor is immobilized in the heat storage material forming bodies 132A, 132B inside the reaction chamber 124 of the second heat exchange type reactor 120 by an exothermic reaction. The heat medium M2 is heated (for example, to 100°C to 380°C) by the exothermic reaction and the heated heat medium M2 is radiated to an outside heating object.

The heat storage material forming bodies 132A, 132B contain a chemical heat storage material for which the amount of heat that is generated and absorbed for immobilization and desorption of water vapor is larger than that of a physical adsorbent. That is, the amount of generation heat (absolute value) when water vapor is immobilized in the chemical heat storage material is larger than the amount of absorption heat (absolute value) when water vapor is desorbed from the physical adsorbent.

Therefore, by immobilizing water vapor desorbed from the heat storage material forming bodies 32A, 32B containing a physical adsorbent by the supply of heat to the first heat exchange type reactor 20 in the heat storage material forming bodies 132A, 132B containing a chemical heat storage material, heat at a higher temperature than the temperature of heat supplied to the first heat exchange type reactor 20 can be radiated from the second heat exchange type reactor 120.

For example, in an example of using mesoporous silica as the physical adsorbent and Ca(OH)₂ is used as the chemical heat storage material, heat of 100°C to 380°C can be radiated from the second heat exchange type reactor 120 by supplying heat of 5°C to 10°C to the first heat exchange type reactor 20.

### (Regeneration)

When the radiation continues and water vapor in the first heat exchange type reactor 20 decreases, the heat storage device 100 is regenerated to an initial state by gathering water vapor inside the device in the first heat exchange type reactor 20 side, and immobilizing the water vapor in the heat storage material forming bodies 32A, 32B in the first heat exchange type reactor 20.

As an example of the concrete method of regeneration, the method of allowing the heat medium M2 maintained at a high temperature (for example, 100°C to 380°C) to flow to the heat medium channel 126 in the second heat exchange type reactor 120 while maintaining the flowing of the heat medium M1 at the predetermined temperature (for example, 5°C to 10°C) to the first heat exchange type reactor 20 in a state in which the valve V1 is open is suitable.

Accordingly, water vapor is desorbed from the heat storage material forming bodies 132A, 132B inside the second heat exchange type reactor 120 by an endothermic reaction and also water vapor is transported from the second heat exchange type reactor 120 to the first heat exchange type reactor 20.

The water vapor reaching the first heat exchange type reactor 20 is immobilized in the heat storage material forming bodies 32A, 32B inside the reaction chamber 24 of the first heat exchange type reactor 20 by an exothermic reaction.

The exothermic reaction is maintained by, for example, maintaining the flowing of the heat medium M1 at the predetermined temperature (for example, 5°C to 10°C) to the first heat exchange type reactor 20.

The heat storage device 100 can repeat the above radiation and regeneration.

In the above radiation and regeneration, an example of supplying heat to a reactor by the flow of a heat medium is shown, but heat may be supplied to a reactor by a temperature control mechanism (not shown).

The amount of water vapor stored in a heat storage device according to the first comparative example is not specifically limited, but a maximum amount of water vapor that can be stored in one reactor and a dead volume of the heat storage device preferably have the following relationship.

That is, in the heat storage device according to the first comparative example, it is preferable to reduce a dead volume of the heat storage device with respect to a maximum amount of water vapor that can be stored in one reactor among two or more reactors as smaller as possible.

The dead volume of a heat storage device represents an effective volume of the range in which water vapor can flow in the heat storage device.

In a heat storage device according to the first comparative example, most of the dead volume is the volume of the water vapor pipe and thus, it is desirable to reduce the volume of the dead volume of the heat storage device as smaller as possible by reducing the volume of the water vapor pipe within the range of permissible pressure losses in the water vapor pipe as smaller as possible.

More specifically, in a heat storage device according to the first comparative example, a dead volume of the heat storage device with respect to a volume at 50°C and 10 kPa of a maximum amount of water vapor that can be immobilized in one reactor is preferably 10% or less, more preferably 5% or less, and particularly preferably 1% or less.

Accordingly, the water vapor pressure in the heat storage device can be maintained at a high level so that the efficiency of radiation or regeneration by the heat storage device can be improved. Particularly during an initial operation, reaction delays due to transport delays of water vapor can effectively be suppressed.

"A maximum amount of water vapor that can be immobilized in one reactor" represents a maximum amount of water vapor that can be immobilized by, among two or more reactors, the reactor capable of immobilizing a greater amount of water vapor than any other reactor. In addition, "a maximum amount of water vapor that can be immobilized in one reactor" is preferably assumed to be equal to a total amount of water vapor stored in the heat storage device.

A calculation example of the relationship between the volume at 50°C and 10 kPa of the maximum amount of water vapor that can be immobilized in one reactor and the dead volume of the heat storage device will be shown.

If the volume of water vapor at 50°C and 10 kPa of the maximum amount of water vapor that can be immobilized in one reactor is 1 L, the dead volume of the heat storage device is 0.1 L, which is 10% of the volume of the water vapor, and the release rate of water vapor from one reactor is 1 L/100 sec(=0.01 L/sec), a delay of 10 sec(=0.1/0.01) arises for water vapor to reach the other reactor from one reactor during an initial operation. If the dead volume of the heat storage device is assumed to be 0.01 L, which is 1% of the volume of the water vapor, the delay during an initial operation is 1 sec(=0.01/0.01).

From the above viewpoint, in a heat storage device according to the first comparative example, the dead volume of the heat storage device with respect to the volume at 50°C and 10 kPa of the maximum amount of water vapor that can be immobilized in one reactor is preferably 10% or less, more preferably 5% or less, and particularly preferably 1% or less.

The dead volume of a heat storage device according to the invention is not specifically limited and may be set to, for example, 10 mL to 10 L. The dead volume is preferably set to 100 mL to 10 L, more preferably 500 mL to 10 L, and particularly preferably 1 Lto 10 L.

### (Physical adsorbent)

Next, a preferred form of a physical adsorbent contained in a first reactor (for example, the first heat exchange type reactor 20) according to the first comparative example will be described.

A porous body can be used as the physical adsorbent.

A porous body having pores of 10 nm or less is preferable as the porous body from the viewpoint of improving responsiveness of immobilization and desorption of water vapor by physical adsorption.

From the viewpoint of production aptitude and the like, 1.5 nm is preferable and 4.0 nm is more preferable as the lower limit of the size of the pore.

A porous body as a primary particle aggregate obtained by aggregating primary particles whose average primary particle diameter is 50 µm or less is preferable as the porous body from the viewpoint of improving responsiveness of immobilization and desorption of water vapor by physical adsorption.

From the viewpoint of production aptitude and the like, 1.0 µm is preferable as the lower limit of the average primary particle diameter.

Specific examples of the porous body include activated carbon, mesoporous silica, zeolite, silica gel, and clay mineral.

As the activated carbon, activated carbon whose specific surface by the BET method is from 800 m²/g to 4000 m²/g (more preferably, from 1000 m²/g to 2000 m²/g) is preferable.

As the mesoporous silica, mesoporous silica whose specific surface by the BET method is from 500 m²/g to 1500 m²/g (more preferably, from 700 m²/g to 300 m²/g) is preferable.

As the zeolite, zeolite whose specific surface by the BET method is from 50 m²/g to 300 m²/g (more desirably, from 100 m²/g to 200 m²/g) is preferable.

As the silica gel, silica gel whose specific surface by the BET method is from 100 m²/g to 1500 m²/g (more preferably, from 300 m²/g to 1000 m²/g) is preferable.

As the clay mineral, a non-crosslinked clay mineral or a cross-linked clay mineral may be used. The clay mineral includes sepiolite, smectite clay (saponite, montmorillonite, hectorite and the like), 4-silicon mica, mica, vermiculite and the like. Among others, sepiolite is preferable.

When a heat storage material according to the first comparative example contains a physical adsorbent (preferably the porous body), the heat storage material may contain one kind of the physical adsorbent (preferably the porous body) or two or more kinds thereof.

In a heat storage device according to the first comparative example, the kind of physical adsorbent (preferably the porous body) can appropriately be selected by adjusting to operating conditions such as the operating temperature.

Therefore, a heat storage device according to the first comparative example has a wider range of selection of the operating temperature when compared with a conventional heat storage device combining a reactor containing a chemical heat storage material and a evaporative condenser.

From the viewpoint of further reducing the amount of heat go out and in for immobilization and desorption of water vapor, it is more preferable for a heat storage material according to the first comparative example to contain at least activated carbon or mesoporous silica.

From the viewpoint of maintaining responsiveness of immobilization and desorption of water vapor at a higher level, the content of a physical adsorbent in a heat storage material of the first reactor is, with respect to the total amount of the heat storage material of the first reactor, preferably 30% by mass or more, and more preferably 50% by mass or more.

When the heat storage material containing a physical adsorbent is used as a forming body (heat storage material forming body), the heat storage material preferably contains a binder, in addition to the physical adsorbent. With the binder being contained in the heat storage material, the shape of the heat storage material forming body is maintained more effectively and therefore, responsiveness of immobilization and desorption of water vapor is further improved.

Preferably, the binder is at least one kind of water-soluble binders.

The water-soluble binders include polyvinyl alcohol, methyl cellulose and the like. Among others, polyvinyl alcohol is preferable.

When the heat storage material in the first reactor contains a physical adsorbent and a binder, the content of the binder in the heat storage material is desirably 5% or less by mass and, more preferably 2% by mass or less.

The heat storage material in the first reactor may contain other components than the physical adsorbent and the binder if necessary.

Other components include carbon and carbon nanotubes (CNT) as a thermal conduction assisting material.

When the heat storage material containing a physical adsorbent is formed into a heat storage material forming body (for example, the heat storage material forming bodies 32A, 32B), the method of forming a heat storage material forming body is not specifically limited and, for example, includes a method of forming by using a known forming method such as pressure forming and extrusion forming from a heat storage material (or slurry containing the heat storage material) containing a physical adsorbent (and other components such as a binder if necessary).

### (Chemical heat storage material)

Next, a preferred form of a chemical heat storage material contained in a second reactor (for example, the second heat exchange type reactor 120) according to the first comparative example will be described.

Inorganic hydroxide is preferable and hydroxide of an alkaline earth metal is more preferable as the chemical heat storage material from the viewpoint of further improving material stability in an immobilization reaction of water vapor and a desorption reaction of water vapor.

The hydroxide of an alkaline earth metal includes, for example, Ca(OH)₂ and Mg(OH)₂. Among others, Ca(OH)₂ is particularly preferable.

Ca(OH)₂ is more reversible (having approximately 100% hydration and dehydration reaction rates) than Mg(OH)₂ and by using Ca(OH)₂, the effect of the invention can be maintained for a long period of time.

When the heat storage material in the second reactor contains a chemical heat storage material, the heat storage material may contain one kind of chemical heat storage material or two or more kinds thereof.

In the first comparative example, the kind of chemical heat storage material can appropriately be selected by adjusting to operating conditions such as the operating temperature.

When the heat storage material in the second reactor contains a chemical heat storage material, from the viewpoint of maintaining the heat storage density at a higher level, the content of the chemical heat storage material in the heat storage material is preferably 50% by mass or more, and more preferably 90% by mass or more.

When the heat storage material containing a chemical heat storage material in the second reactor is used as a forming body (heat storage material forming body), the heat storage material preferably contains a binder, in addition to the chemical heat storage material. With the binder being contained in the heat storage material, the shape of the heat storage material forming body is maintained more effectively and therefore, responsiveness of immobilization and desorption of water vapor by the chemical heat storage material is further improved.

Preferably, the binder is at least one kind of water-soluble binders.

The water-soluble binders include polyvinyl alcohol, methyl cellulose and the like. Among others, polyvinyl alcohol is preferable.

When the heat storage material in the second reactor contains a chemical heat storage material and a binder, the content of the binder in the heat storage material is preferably 5% or less by mass, and more preferably 2% by mass or less.

The heat storage material in the second reactor may contain other components than the chemical heat storage material and the binder if necessary.

Other components include carbon and carbon nanotubes (CNT) as a thermal conduction assisting medium.

When the heat storage material containing a chemical heat storage material is formed into a heat storage material forming body (for example, the heat storage material forming bodies 132A, 132B), the method of forming a heat storage material forming body is not specifically limited and includes, for example, a method of forming by using a known forming method such as pressure forming and extrusion forming from a heat storage material (or slurry containing the heat storage material) containing a chemical heat storage material (and other components such as a binder if necessary).

### (Preferred form of the reaction chamber)

Next, a preferred form of the reaction chamber (for example, the reaction chamber 24 in the first heat exchange type reaction chamber 20 and the reaction chamber 124 in the second heat exchange type reaction chamber 120) will be described by taking the reaction chamber 24 in the first heat exchange type reaction chamber 20 as an example.

The inner wall of the reaction chamber 24 in the first heat exchange type reaction chamber 20 preferably has a contact portion with the heat storage material forming bodies 32A, 32B. More preferable form is a form in which the inner wall of the reaction chamber 24 and the principal surface of one of the heat storage material forming bodies 32A, 32B are in contact (that is, the heat storage material forming body is sandwiched between the inner wall of the reaction chamber and the surface of the support).

That is, each of the heat storage material forming bodies 32A, 32B preferably holds contact with the inner wall of the reaction chamber 24 and the surface of the support 34.

According to the configuration in which the inner wall of the reaction chamber 24 has a contact portion with the heat storage material forming bodies 32A, 32B, heat can be exchanged between the first heat exchange type reactor and heat storage material forming body more effectively through the inner wall of the reaction chamber 24. In general, if the heat storage material forming body is repeatedly used, the heat storage material forming body undergoes volume expansion and shrinkage repeatedly due to immobilization and desorption of water vapor so that fractures (including cracks) or pulverization may be caused in the heat storage material forming body, but according to the above configuration, the fractures (including cracks) or the pulverization of the heat storage material forming body when used repeatedly can be suppressed more effectively.

A preferred form of the reaction chamber 124 in the second heat exchange type reactor 120 is the same as that of the reaction chamber 24 of the first heat exchange type reactor 20.

Next, an example of the method of accommodating a layered body containing two heat storage material forming bodies in a reaction chamber according to the first comparative example will be described.

A method including the following processes 1 to 3 is suitable as the accommodation method.
(Process 1) First, prepare two heat storage material forming bodies in which water vapor is not immobilized.
   More specifically, form heat storage material forming bodies by pressure forming and the like from a powder heat storage material.
   The volume of the heat storage material forming body is controlled to such a volume that is smaller than the volume of a space determined by the inner wall of the reaction chamber and the surface of the support (a space to be filled with the heat storage material forming body) and allows the heat storage material forming body and the inner wall of the reaction chamber to come into contact with each other when the volume is expanded by immobilizing water vapor in Process 3 described later.
(Process 2) Next, prepare a layered body configured by sandwiching a support between the two heat storage material forming bodies prepared in Process 1 and accommodate the layered body in the reaction chamber.
(Process 3) Next, immobilize water vapor in the two heat storage material forming bodies accommodated in the reaction chamber.

According to the above method, the surface of the two heat storage material forming bodies can effectively be brought into contact with the inner wall of the reaction chamber and the surface of the support by using a phenomenon in which the volume of the two heat storage material forming bodies is expanded by immobilization of water vapor.

Once the surface of the heat storage material forming bodies and the inner wall of the reaction chamber come into contact, the volume shrinkage when water vapor is desorbed from the heat storage material forming bodies is suppressed. In this case, water vapor is desorbed from inside the heat storage material forming bodies while the contact is maintained.

A single heat storage material forming body can be accommodated in a reaction chamber according to the first comparative example in the same manner as described above.

That is, a method including the following processes a to c is suitable. (Process a) First, prepare a heat storage material forming body in which water vapor is not immobilized.

More specifically, form heat storage material forming bodies by pressure forming and the like from a powder heat storage material.

The volume of the heat storage material forming body is controlled to such a volume that is smaller than the volume of a space determined by the inner wall of the reaction chamber (a space to be filled with the heat storage material forming body) and allows the heat storage material forming body and the inner wall of the reaction chamber to come into contact with each other when the volume is expanded by immobilizing water vapor.
(Process b) Next, accommodate the heat storage material forming body prepared in Process a in the reaction chamber.
(Process c) Next, immobilize water vapor in the heat storage material forming body accommodated in the reaction chamber.

Next, embodiments of the invention will be described. The same reference numerals are attached to components basically the same as those in the first comparative example or the above configuration and the description of such components may be omitted.

### [First embodiment]

FIG. 5 is a diagram schematically showing a heat storage device 200 according to a first embodiment of the invention.

As shown in FIG. 5, the heat storage device 200 is different from the heat storage device 100 according to the first comparative example in that a pressure control means 220 is provided in a water vapor pipe 10.

Other configuration, the preferable range, and the modification of the heat storage device 200 are the same as those of the heat storage device 100 according to the first comparative example. The basic operation of the radiation and regeneration is the same as that of the heat storage device 100 according to the first comparative example.

The pressure control means 220 is a means that controls a difference in water vapor pressure inside the heat storage device 200 by an external force. Specific examples of the pressure control means 220 include known units such as a compressor and pressure pump.

In the heat storage device 200, a difference in water vapor pressure between two reactors is controlled more effectively by operating the pressure control means 220.

According to the invention, when water vapor is transported from the first heat exchange type reaction chamber 20 to the second heat exchange type reaction chamber 120 by supplying heat to the first heat exchange type reaction chamber 20, the water vapor pressure at the first heat exchange type reaction chamber 20 side can be raised by operating the pressure control means 220. Accordingly, the speed of transporting the water vapor can be increased so that the reaction rate of immobilization of water vapor in the second heat exchange type reactor 120 can be made faster. As a result, heat at a higher temperature can be radiated from the second heat exchange type reactor 120.
In addition, the water vapor pressure at the second heat exchange type reactor 120 side can be raised by operating the pressure control means 220 and the reaction rate can also thereby be slowed down.

Also when water vapor is transported from the second heat exchange type reactor 120 to the first heat exchange type reactor 20, a difference in water vapor pressure between two reaction chambers is controlled by the same principle as described above.

In the heat storage device 200 shown in FIG. 5, the pressure control means 220 is provided in the first heat exchange type reactor 20 side with respect to the valve V1, however, the location thereof is not specifically limited as long as the pressure control means is provided at least at one location of the water vapor pipe.

For example, a modification of the heat storage device 200 shown in FIG. 5 includes an example in which the pressure control means 220 is provided in the second heat exchange type reactor 120 side with respect to the valve V1.

### [Second embodiment]

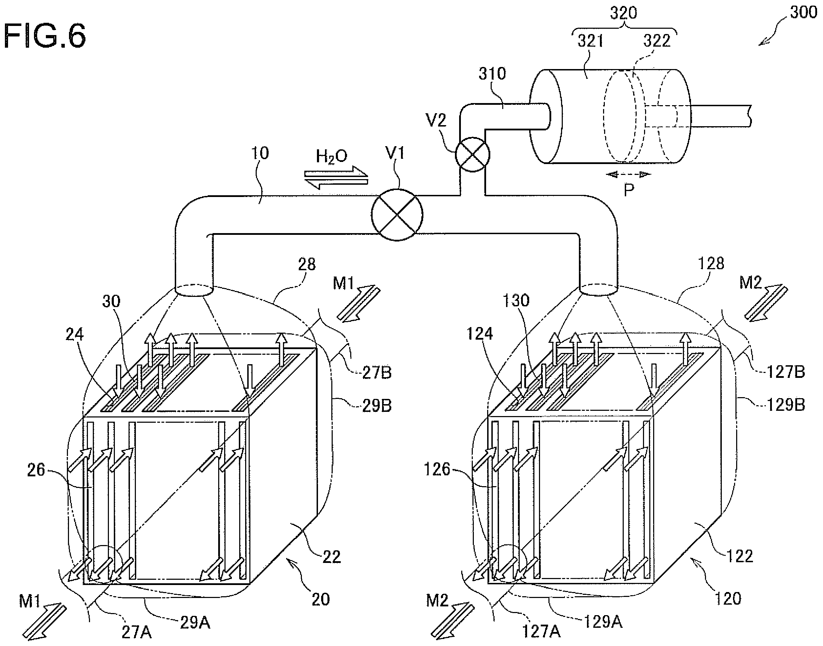

FIG. 6 is a diagram schematically showing a heat storage device 300 according to a second embodiment of the invention.

As shown in FIG. 6, the heat storage device 300 is different from the heat storage device 100 according to the first comparative example in that a volume control means 320 (a cylinder 321 and a piston 322) is connected to the water vapor pipe 10 via a pipe 310 including a valve V2.

Other configuration, the preferable range, and the modification of the heat storage device 300 are the same as those of the heat storage device 100 according to the first comparative example. The basic operation of the radiation and regeneration is the same as that of the heat storage device 100 according to the first comparative example.

The volume control means 320 includes the cylinder 321 and the piston 322 provided movably inside the cylinder 321 in an axial method (direction of an arrow P) of the cylinder 321, and the volume inside the cylinder 321 can be increased or decreased by moving the piston 322 automatically or manually in the direction of the arrow P. Accordingly, the volume of the water vapor pipe and, by extension, the volume of the whole heat storage device can be controlled.

By controlling the volume by the volume control means 320, a difference in water vapor pressure between two reactors can be controlled more effectively so that water vapor can be transported more effectively.

In the heat storage device 300 shown in FIG. 6, the volume control means 320 is provided at the second heat exchange type reactor 120 side with respect to the valve V1, however, the location thereof is not specifically limited as long as the pressure control means is provided at least at one location of the water vapor pipe. For example, the volume control means may be connected at the first heat exchange type reactor 20 side with respect to the valve V1.

Alternatively, a first volume control means may be connected at the first heat exchange type reactor 20 side with respect to the valve V1 via a valve, and a second volume control means may be connected at the second heat exchange type reactor 120 side via a valve.

With the volume control means being included in the heat storage device 100 according to the invention, when water vapor is transported from the first heat exchange type reactor 20 to the second heat exchange type reactor 120, water vapor can efficiently be sent by pressure by decreasing the volume of the first heat exchange type reactor 20 side. Similarly, when water vapor is transported from the second heat exchange type reactor 120 side to the first heat exchange type reactor 20 side, water vapor can efficiently be sent by pressure by decreasing the volume of the second heat exchange type reactor 120 side.

### [Second comparative example]

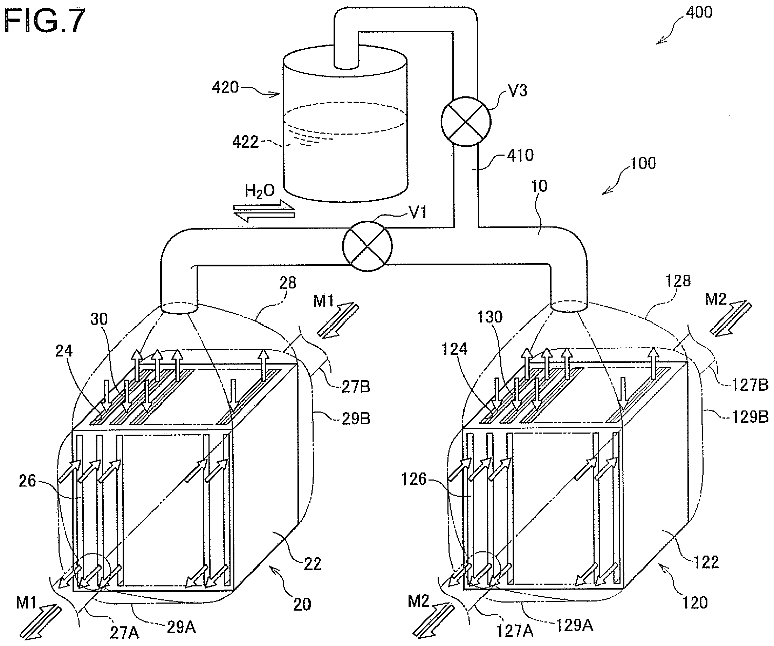

FIG. 7 is a diagram schematically showing a heat storage device 400 according to a second comparative example.

As shown in FIG. 7, the heat storage device 400 is different from the heat storage device 100 according to the first comparative example in that a third reactor 420 is connected to the water vapor pipe 10 via a pipe 410 including a valve V3. The third reactor 420 is a reactor (namely, an evaporative condenser) that liquefies (condenses) water vapor and vaporizes (evaporates) water 422.

Other configuration, the preferable range, and the modification of the heat storage device 400 are the same as those of the heat storage device 100 according to the first comparative example. The basic operation of the radiation and regeneration is the same as that of the heat storage device 100 according to the first comparative example.

Liquefaction and vaporization (vapor-liquid phase changes) in the third reactor 420 can be carried out by at least one of heating/cooling by a temperature control means (not shown) and pressurization/pressure reduction by a pressure control means (not shown).

By using vapor-liquid phase changes through the third reactor 420, the flow amount of water vapor in the heat storage device 400 can be controlled more effectively.

For example, when water vapor is transported from the first heat exchange type reactor 20 to the second heat exchange type reactor 120, the flow amount of water vapor in the heat storage device 400 can be increased by vaporizing the water 422 in the third reactor 420 and opening the valve V3. As a result, the reaction rate of immobilization of water vapor in the second heat exchange type reactor 120 can be made faster and, by extension, heat at a higher temperature can be radiated from the second heat exchange type reactor 120.

In addition, the flow amount of water at the second heat exchange type reactor 120 side can be decreased by condensing (liquefying) water vapor inside the device by the third reactor 420, and the reaction rate can thereby be reduced.

In addition, water vapor in the heat storage device 400 can be separated and stored as water by the third reactor 420. Accordingly, performance of heat storage and heat radiation by the heat storage device 400 is maintained more stably.

In the heat storage device 400 shown in FIG. 7, the third reactor 420 is connected in the second heat exchange type reactor 120 side with respect to the valve V1, but when a heat storage device includes a third reactor that liquefies water vapor and vaporizes water, the location thereof is not specifically limited as long as the third reactor is connected to at least one location of the water vapor pipe.

For example, a modification of the heat storage device 400 shown in FIG. 7 includes an example in which the third reactor 420 is connected in the first heat exchange type reactor 20 side with respect to the valve V1. In addition, included is an example in which the third reactor 420 is connected in both of the first heat exchange type reactor 20 side and the second heat exchange type reactor 120 side with respect to the valve V1 via valves respectively.

In the foregoing, heat storage devices according to the embodiments of the invention have been described, but the invention is not limited to the above embodiments. The invention is defined in the appended claims.

A heat storage device according to the invention may include at least one other reactor than the above reactors.

Other reactor includes a reactor, like the first heat exchange type reactor 20 or the second heat exchange type reactor 120, containing a heat storage material that stores heat when water vapor is desorbed and radiates heat when water vapor is immobilized, or a reactor that, like the third reactor 420, liquefies water vapor and evaporates water can be cited.

Also in a heat storage device according to each of the above embodiments, each heat exchange type reactor and a water vapor pipe are connected via a header member, but each heat exchange type reactor and a water vapor pipe may directly be connected in an airtight state without aid of the header member. Alternatively, a heat exchange type reactor integrated with a header member may be used to connect the heat exchange type reactor and a water vapor pipe in an airtight state.

Also in a heat storage device according to each of the above embodiments, the water vapor pipe 10 is provided with the valve V1, but the valve V1 may be omitted. Even if the valve V1 is omitted, a difference in water vapor pressure can be generated between the first heat exchange type reactor 20 and the second heat exchange type reactor 120 by supplying heat to at least one of the first heat exchange type reactor 20 and the second heat exchange type reactor 120, and water vapor in the reactor can be immobilized and desorbed by the difference in the water vapor pressure.

Also in a heat storage device according to each of the above embodiments, the first heat exchange type reactor 20 includes a heat medium channel, but as the first heat exchange type reactor 20, a reactor including a temperature control means such as a heater, instead of the heat medium channel (or in addition to the heat medium channel), may also be used. Accordingly, immobilization and desorption reactions of water vapor can be caused in a heat storage material forming body by supplying heat to the whole reactor by the temperature control means.

As has been described above, a heat storage device according to the invention has a wide range of selection of the operating temperature (particularly, the supply temperature) and can radiate heat at a still higher temperature by storing heat supplied from outside.

Therefore, a heat storage device according to the invention can suitably be used for application like, for example, warming-up of elements, air conditioning, and heat transportation.

## Claims

1. A heat storage device (100) comprising:
two or more reactors (20, 120, 420) including a first reactor (20) having a heat storage material containing a physical adsorbent that stores heat when water vapor is desorbed and radiates heat when the water vapor is immobilized by physical adsorption, and a second reactor (120) having a heat storage material containing a chemical heat storage material that stores heat when water vapor is desorbed and radiates heat when the water vapor is immobilized by a chemical reaction; and
a water vapor pipe (10) connecting the two or more reactors (20, 120, 420) to cause the water vapor to flow between the two or more reactors (20, 120, 420), **characterized in that** the water vapor pipe (10) includes at least one of a pressure control means (220) configured to control the difference in the water vapor pressure between the two or more reactors (20, 120, 420), such that when heat is applied to one of the two or more reactors (20, 120, 420), the pressure control means (220) can be operated to raise the water vapor pressure at a side of the reactor to which the heat is applied so that the reaction rate of immobilization at the other of the two or more reactors (20, 120, 420) can be made faster, or to raise the water vapor pressure at a side of the other of the two or more reactors (20, 120, 420) so that the reaction rate of immobilization at the other of the two or more reactors (20, 120, 420) can be slowed down, and a volume control means (320) that includes a cylinder (321) and a piston (322) and configured to control a volume of the water vapor pipe (10) by moving the piston (322) inside the cylinder (321) such that a volume inside the cylinder (321) is increased or decreased, wherein
the water vapor desorbed from one of the reactors (20, 120, 420) is immobilized in the other reactor (20, 120, 420) by using a difference in water vapor pressure between the two or more reactors (20, 120, 420).

2. The heat storage device (100) according to claim 1, wherein the water vapor pipe (10) is provided with a valve (V1) to control the difference in the water vapor pressure by opening/closing the valve (V1).

3. The heat storage device (100) according to claim 1 or 2, wherein the two or more reactors (20, 120, 420) further include a third reactor (420) that condenses the water vapor and vaporizes water.

4. The heat storage device (100) according to any one of claims 1 to 3, wherein the first reactor (20) and the second reactor (120) have a heat medium channel (26, 126) through which a heat medium that exchanges heat with the heat storage material flows.

5. The heat storage device (100) according to any one of claims 1 to 4, wherein the first reactor (20) and the second reactor (120) have two or more reaction chambers (24, 124) in which the heat storage material is contained, and a heat medium channel (26, 126) arranged at least between the reaction chambers (24, 124) and through which a heat medium that exchanges heat with the heat storage material flows.

6. The heat storage device (100) according to any one of claims 1 to 5, wherein a dead volume is 10% or less with respect to a volume at 50°C and 10 kPa of a maximum amount of water vapor that can be immobilized in one reactor among the two or more reactors (20, 120, 420).

7. The heat storage device (100) according to any one of claims 1 to 6, wherein the physical adsorbent is at least one selected from the group consisting of activated carbon, mesoporous silica, zeolite, silica gel, and clay mineral.

8. The heat storage device (100) according to any one of claims 1 to 7, wherein the chemical heat storage material is an inorganic hydroxide.

9. The heat storage device (100) according to any one of claims 1 to 8, wherein the chemical heat storage material is a hydroxide of an alkaline earth metal.

## Patentansprüche

1. Wärmespeichervorrichtung (100), umfassend:
zwei oder mehr Reaktoren (20, 120, 420), umfassend einen ersten Reaktor (20) mit einem Wärmespeichermaterial, das ein physikalisches Adsorptionsmittel enthält, das Wärme speichert, wenn Wasserdampf desorbiert wird, und Wärme abgibt, wenn Wasserdampf durch physikalische Adsorption immobilisiert wird, und einen zweiten Reaktor (120) mit einem Wärmespeichermaterial, das ein chemisches Wärmespeichermaterial enthält, das Wärme speichert, wenn Wasserdampf desorbiert wird, und Wärme abgibt, wenn Wasserdampf durch eine chemische Reaktion immobilisiert wird; und
eine Wasserdampfleitung (10), die die zwei oder mehr Reaktoren (20, 120, 420) verbindet, um zu bewirken, dass Wasserdampf zwischen den zwei oder mehr Reaktoren (20, 120, 420) strömt, **dadurch gekennzeichnet, dass** die Wasserdampfleitung (10) mindestens ein Drucksteuermittel (220) umfasst, das so konfiguriert sind, dass es die Differenz im Wasserdampfdruck zwischen den zwei oder mehr Reaktoren (20, 120, 420) steuert, so dass, wenn Wärme auf einen der zwei oder mehr Reaktoren (20, 120, 420) aufgebracht wird, das Drucksteuermittel (220) so betrieben werden kann, dass der Wasserdampfdruck auf einer Seite des Reaktors, auf die die Wärme aufgebracht wird, erhöht wird, so dass die Immobilisierungsreaktionsrate auf dem anderen der zwei oder mehr Reaktoren (20, 120, 420) beschleunigt werden kann, oder um den Wasserdampfdruck auf einer Seite des anderen der zwei oder mehr Reaktoren (20, 120, 420) zu erhöhen, so dass die Immobilisierungsreaktionsrate auf dem anderen der zwei oder mehr Reaktoren (20, 120, 420) verlangsamt werden kann, und das Volumensteuermittel (320), das einen Zylinder (321) und einen Kolben (322) umfasst und das so konfiguriert ist, dass es ein Volumen der Wasserdampfleitung (10) durch Bewegen des Kolbens (322) innerhalb des Zylinders (321) so steuert, dass ein Volumen innerhalb des Zylinders (321) vergrößert oder verkleinert wird, wobei der desorbierte Wasserdampf aus einem der Reaktoren (20, 120, 420) in dem anderen Reaktor (20, 120, 420) durch Ausnutzung eines Wasserdampfdruckunterschieds zwischen den beiden oder mehreren Reaktoren (20, 120, 420) immobilisiert wird.

2. Wärmespeichervorrichtung (100) nach Anspruch 1, wobei die Wasserdampfleitung (10) mit einem Ventil (V1) zum Steuern der Wasserdampfdruckdifferenz durch Öffnen/Schließen des Ventils (V1) versehen ist.

3. Wärmespeichervorrichtung (100) nach Anspruch 1 oder 2, wobei die zwei oder mehr Reaktoren (20, 120, 420) ferner einen dritten Reaktor (420) umfassen, der Wasserdampf kondensiert und Wasser verdampft.

4. Wärmespeichervorrichtung (100) nach einem der Ansprüche 1 bis 3, wobei der erste Reaktor (20) und der zweite Reaktor (120) einen Wärmemediumkanal (26, 126) für ein Wärmemedium aufweisen, durch den ein Wärmemedium fließt, das Wärme mit dem Wärmespeichermaterial austauscht.

5. Wärmespeichervorrichtung (100) nach einem der Ansprüche 1 bis 4, wobei der erste Reaktor (20) und der zweite Reaktor (120) zwei oder mehr Reaktionskammern (24, 124), in denen das Wärmespeichermaterial enthalten ist, und einen Wärmemediumkanal (26, 126) aufweisen, der zumindest zwischen den Reaktionskammern (24, 124) angeordnet ist und durch den ein Wärmemedium fließt, das Wärme mit dem Wärmespeichermaterial austauscht.

6. Wärmespeichervorrichtung (100) nach einem der Ansprüche 1 bis 5, wobei ein Totvolumen 10 % oder weniger in Bezug auf ein Volumen bei 50 °C und 10 kPa einer maximalen Wasserdampfmenge beträgt, die in einem der beiden oder mehreren Reaktoren (20, 120, 420) immobilisiert werden kann.

7. Wärmespeichervorrichtung (100) nach einem der Ansprüche 1 bis 6, wobei das physikalische Adsorptionsmittel mindestens ein Mittel ist, das aus der Gruppe ausgewählt ist, die aus Aktivkohle, mesoporösem Siliciumdioxid, Zeolith, Siliciumdioxidgel und Tonmineral besteht.

8. Wärmespeichervorrichtung (100) nach einem der Ansprüche 1 bis 7, wobei das chemische Wärmespeichermaterial ein anorganisches Hydroxid ist.

9. Wärmespeichervorrichtung (100) nach einem der Ansprüche 1 bis 8, wobei das chemische Wärmespeichermaterial ein Hydroxid eines Erdalkalimetalls ist.

## Revendications

1. Dispositif de stockage thermique (100) comprenant :
deux ou plusieurs réacteurs (20, 120, 420) comprenant un premier réacteur (20) ayant un matériau de stockage thermique contenant un adsorbant physique qui stocke la chaleur lorsque la vapeur d'eau est désorbée et rayonne de chaleur lorsque la vapeur d'eau est immobilisée par adsorption physique, et un second réacteur (120) ayant un matériau de stockage thermique contenant un matériau de stockage thermique chimique qui stocke la chaleur lorsque la vapeur d'eau est désorbée et rayonne de la chaleur lorsque la vapeur d'eau est immobilisée par une réaction chimique ; et
un tuyau de vapeur d'eau (10) reliant lesdits deux ou plusieurs réacteurs (20, 120, 420) pour faire en sorte que la vapeur d'eau s'écoule entre lesdits deux ou plusieurs réacteurs (20, 120, 420), **caractérisé en ce que** le tuyau de vapeur d'eau (10) comprend au moins un moyen parmi les moyens de contrôle de pression (220) configuré pour contrôler la différence de la pression de vapeur d'eau entre lesdits deux ou plusieurs réacteurs (20, 120, 420), de telle sorte que lorsque la chaleur est appliquée à un réacteur parmi lesdits deux ou plusieurs réacteurs (20, 120, 420), les moyens de contrôle de pression (220) peut être actionné pour augmenter la pression de vapeur d'eau sur un côté du réacteur auquel la chaleur est appliquée, de sorte que la vitesse de réaction d'immobilisation sur l'autre desdits deux ou plusieurs réacteurs (20, 120, 420) puisse être accélérée, ou pour augmenter la pression de vapeur d'eau sur un côté de l'autre desdits deux ou plusieurs réacteurs (20, 120, 420) de sorte que la vitesse de réaction d'immobilisation sur l'autre desdits deux ou plusieurs réacteurs (20, 120, 420) puisse être ralentie, et les moyens de contrôle de volume (320) qui comprend un cylindre (321) et un piston (322) et qui est configuré pour contrôler un volume du tuyau de vapeur d'eau (10) en déplaçant le piston (322) à l'intérieur du cylindre (321) de telle sorte qu'un volume à l'intérieur du cylindre (321) soit augmenté ou diminué, dans lequel
la vapeur d'eau désorbée d'un des réacteurs (20, 120, 420) est immobilisée dans l'autre réacteur (20, 120, 420) en utilisant une différence de pression de vapeur d'eau entre lesdits deux ou plusieurs réacteurs (20, 120, 420).

2. Dispositif de stockage thermique (100) selon la revendication 1, dans lequel le tuyau de vapeur d'eau (10) est muni d'une vanne (V1) pour contrôler la différence de pression de vapeur d'eau en ouvrant / fermant la vanne (V1).

3. Dispositif de stockage thermique (100) selon la revendication 1 ou 2, dans lequel lesdits deux ou plusieurs réacteurs (20, 120, 420) comprennent en outre un troisième réacteur (420) qui condense la vapeur d'eau et vaporise l'eau.

4. Dispositif de stockage thermique (100) selon l'une quelconque des revendications 1 à 3, dans lequel le premier réacteur (20) et le second réacteur (120) ont un canal de milieu thermique (26, 126) à travers lequel s'écoule un milieu thermique qui échange de la chaleur avec le matériau de stockage thermique.

5. Dispositif de stockage thermique (100) selon l'une quelconque des revendications 1 à 4, dans lequel le premier réacteur (20) et le second réacteur (120) ont deux ou plusieurs chambres de réaction (24, 124) dans lesquelles le matériau de stockage thermique est contenu, et un canal de milieu thermique (26, 126) disposé au moins entre les chambres de réaction (24, 124) et à travers lequel un milieu thermique qui échange de la chaleur avec le matériau de stockage thermique s'écoule.

6. Dispositif de stockage thermique (100) selon l'une quelconque des revendications 1 à 5, dans lequel un volume mort est de 10 % ou moins par rapport à un volume à 50 °C et 10 kPa d'une quantité maximale de vapeur d'eau qui peut être immobilisée dans un réacteur parmi lesdits deux ou plusieurs réacteurs (20, 120, 420).

7. Dispositif de stockage thermique (100) selon l'une quelconque des revendications 1 à 6, dans lequel l'adsorbant physique est au moins un élément choisi dans le groupe constitué de charbon actif, silice mésoporeuse, zéolite, gel de silice et minéral argileux.

8. Dispositif de stockage thermique (100) selon l'une quelconque des revendications 1 à 7, dans lequel le matériau de stockage thermique chimique est un hydroxyde inorganique.

9. Dispositif de stockage thermique (100) selon l'une quelconque des revendications 1 à 8, dans lequel le matériau de stockage thermique chimique est un hydroxyde d'un métal alcalino-terreux.
